# EUROPEAN PATENT APPLICATION

(11) **EP 4 391 234 A1**
(43) Date of publication of application: **26.06.2024**
(21) Application number: 23156621.7
(22) Date of filing: 14.02.2023
(51) Int. Cl.: H01Q 21/24, H04W 72/23, H04B 7/185, H04W 74/08, H04W 84/06

(54) **TERMINAL APPARATUS AND COMMUNICATION METHOD**

(30) Priority: 22.12.2022 JP 2022205289
(71) Applicant: Sharp Kabushiki Kaisha, Sakai-shi Osaka 590-8522 (JP)
(72) Inventor: NAKASHIMA, Daiichiro, Sakai City, Osaka, 590-8522 (JP); OUCHI, Wataru, Sakai City, Osaka, 590-8522 (JP); LIU, Liqing, Sakai City, Osaka, 590-8522 (JP); SUZUKI, Shoichi, Sakai City, Osaka, 590-8522 (JP); SAKAMOTO, Ryunosuke, Sakai City, Osaka, 590-8522 (JP)
(74) Representative: Müller Hoffmann & Partner

(57) **Abstract**

Object

An initial connection procedure between a terminal apparatus and a base station apparatus via a satellite can be efficiently implemented.

Solution

Information indicating a mapping between a polarization mode and a RACH occasion is received, and a RACH is transmitted in a RACH occasion corresponding to a polarization mode to be used for transmission.

## Description

### Technical Field

The present invention relates to a terminal apparatus and a communication method.

### Background Art

In the 3rd Generation Partnership Project (3GPP), a radio access method and a radio network for cellular mobile communications (hereinafter referred to as "Long Term Evolution (LTE)" or "Evolved Universal Terrestrial Radio Access (EUTRA)") have been standardized. In LTE, a base station apparatus is also referred to as an evolved NodeB (eNodeB) and a terminal apparatus is also referred to as a User Equipment (UE). LTE is a cellular communication system in which multiple areas covered by base station apparatuses are deployed in a cell structure. A single base station apparatus may manage multiple serving cells.

In 3GPP, as 5G communication schemes, next-generation specifications (New Radio (NR)) have been studied and standardized. NR is required to satisfy requirements for three scenarios including enhanced Mobile BroadBand (eMBB), massive Machine Type Communication (mMTC), and Ultra Reliable and Low Latency Communication (URLLC) in a single technology framework.

In 3GPP, studies have been carried out on a technique for enabling covering areas such as mountainous areas, remote rural areas, and the sea by means of non-terrestrial networks (NTN) using a high altitude platform station (or high altitude pseudo satellite (HAPS)), a low earth orbit (LEO) satellite, a medium earth orbit (MEO) satellite, and the like (NPL 1). NTN includes a satellite communication system having a cell radius much larger than a cell radius of a known cellular communication system.

### Citation List

### Non Patent Literature

NPL 1: 3GPP TR 38.821 V16.1.0 (2021-05) "3rd Generation Partnership Project; Technical Specification Group Radio Access Network; Solutions for NR to support non-terrestrial networks (NTN) (Release 16)"

### Summary of Invention

### Technical Problem

In NTN, various polarization modes are used. For example, linear polarization, horizontal polarization, vertical polarization, circular polarization, right-hand circular polarization, and left-hand circular polarization may be used. A mismatch of polarization modes between a satellite and a terminal apparatus leads to degradation in link performance. An aspect of the present invention provides a terminal apparatus that performs efficient initial connection, and a communication method used for the terminal apparatus.

### Solution to Problem

(1) In order to accomplish the object described above, an aspect of the present invention is contrived to provide the following means. In other words, a first aspect of the present invention is a terminal apparatus including a processor and a memory configured to store a computer program code. The terminal apparatus performs receiving information indicating a mapping between a polarization mode and a RACH occasion, and transmitting a RACH in a RACH occasion corresponding to a polarization mode to be used for transmission.
(2) In addition, the polarization mode is any of linear polarization, horizontal polarization, vertical polarization, circular polarization, right-hand circular polarization, and left-hand circular polarization.
(3) A second aspect of the present invention is a communication method used in a terminal apparatus. The communication method includes the steps of receiving information indicating a mapping between a polarization mode and a RACH occasion, and transmitting a RACH in a RACH occasion corresponding to a polarization mode to be used for transmission.
(4) In addition, the polarization mode is one of linear polarization, horizontal polarization, vertical polarization, circular polarization, right-hand circular polarization, and left-hand circular polarization.

### Advantageous Effects of Invention

According to the present invention, initial connection can be efficiently performed between a terminal apparatus and a base station apparatus via a satellite.

### Brief Description of Drawings

FIG. 1 is a conceptual diagram of a radio communication system according to an aspect of the present embodiment.
FIG. 2 is a schematic diagram illustrating an example of a resource grid in a subframe according to an aspect of the present embodiment.
FIG. 3 is a schematic block diagram illustrating a configuration of a terminal apparatus 1 according to an aspect of the present embodiment.
FIG. 4 is a schematic block diagram illustrating a configuration of a base station apparatus 3 according to an aspect of the present embodiment.
FIG. 5 is a diagram illustrating an example of an initial connection procedure according to an aspect of the present embodiment.

### Description of Embodiments

An embodiment of the present invention will be described below.

"A and/or B" may be a term including "A", "B", or "A and B".

The fact that a parameter or information indicates one or multiple values may mean that the parameter or the information includes at least a parameter or information indicating the one or the multiple values. A higher layer parameter may be a single higher layer parameter. The higher layer parameter may be an Information Element (IE) including multiple parameters.

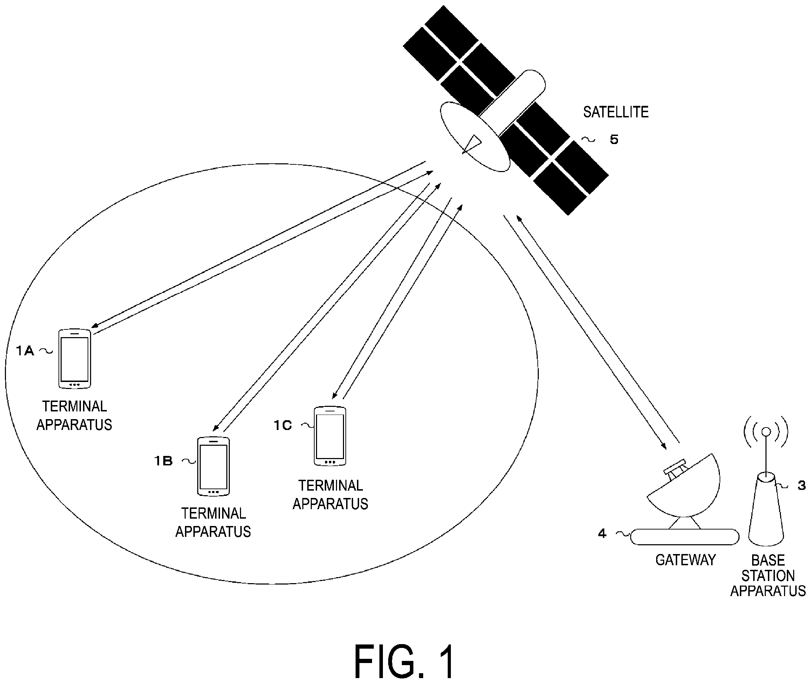

FIG. 1 is a conceptual diagram of a radio communication system according to an aspect of the present embodiment. In FIG. 1, the radio communication system includes terminal apparatuses 1A to 1C, a base station apparatus 3, a gateway 4, and a satellite 5. The terminal apparatuses 1A to 1C are each hereinafter also referred to as a terminal apparatus 1. The terminal apparatus 1 is also referred to as a UE. The base station apparatus 3 is hereinafter also referred to as a gNB. FIG. 1 illustrates a high-level configuration of an exemplary satellite radio access network (RAN). The satellite RAN includes a platform installed in space, such as the satellite 5 and the gateway 4 for connecting the satellite 5 to the base station apparatus 3. A radio link between the gateway 4 and the satellite 5 is referred to as a feeder link. A radio link between the terminal apparatus 1 and the satellite 5 is referred to as an access link.

Satellites may be categorized into a low earth orbit (LEO), a medium earth orbit (MEO), or a geostationary orbit (GEO). The LEO satellite has, generally, an orbital altitude of 250 to 1,500 km (for example, above global sea level) and an orbital period of 90 to 120 minutes. The MEO satellite has, generally, an orbital altitude of 5,000 to 25,000 km and an orbital period of 3 to 15 hours. The GEO satellite has an orbital altitude of approximately 35,786 km and an orbital period of approximately 24 hours. In general, the orbital period increases as the orbital altitude increases.

The access link and the feeder link need to operate in a line-of-sight (LOS) environment, and an LOS component is dominant. As a result, a signal received on the earth has the same polarization as a signal transmitted by the satellite 5. Thus, through selection of linear polarization, horizontal polarization, vertical polarization, circular polarization, right-hand circular polarization (RHCP), and left-hand circular polarization (LHCP), orthogonality between two signals transmitted by the satellite 5 can be achieved. Similarly, a signal received by the satellite 5 has the same polarization as a signal transmitted by the terminal apparatus 1. Thus, through appropriate selection of a polarization mode, orthogonality between signals transmitted by multiple terminal apparatuses 1 can be achieved.

The terminal apparatus 1 may have different antenna types. The terminal apparatus 1 may support different polarization modes. The terminal apparatus 1 may support different polarization modes as the polarization modes to be used for transmission. The terminal apparatus 1 may support different polarization modes as the polarization modes to be used for reception. For example, the terminal apparatus 1 may include a linear polarization antenna. For example, the terminal apparatus 1 may include a circular polarization antenna. In a case that there is an inconsistency in polarization between the terminal apparatus 1 and the satellite 5, this leads to degradation in downlink performance and degradation in uplink performance.

Thus, an exemplary embodiment of the present disclosure provides a technique for configuring a random access channel transmission occasion according to a polarization mode and performing initial connection while achieving consistency in polarizations. Such an embodiment provides various benefits and/or advantages. In general, such an embodiment provides a method for efficiently handling association between cells in NTN and polarization modes. As a more specific example, such an embodiment facilitates spectrally efficient performance of a link between the satellite 5 and the terminal apparatus 1.

In some embodiments, a network node (for example, the satellite 5, the gateway 4, and the base station apparatus 3) in NTN can configure a reception device of the network node to use a specific polarization mode in a case of using a specific random access channel. The polarization mode to be configured may be linear polarization (for example, horizontal or vertical) or circular polarization (for example, RHCP or LHCP). For example, the network node may serve multiple beams, and each of the multiple beams may require a beam-specific polarization mode. The network node can provide the terminal apparatus 1 with an indication of the polarization mode to be used by the reception device for reception of a random access channel using different beams of the network node.

The network node can configure and use a random access channel occasion (RACH occasion) different for each polarization mode. The network node provides the terminal apparatus 1 with information indicating association between the polarization mode and the RACH occasion. The terminal apparatus 1 transmits a RACH by using a RACH occasion corresponding to a polarization mode supported by the terminal apparatus 1. The network node receives the RACH in the configured polarization mode.

The network node transmits a random access channel response (RACH response) in a polarization mode corresponding to an SSB corresponding to the RACH. Multiple RACH occasions are associated with each SSB. The network node transmits the RACH response in the polarization mode the same as the polarization mode used for transmission of the SSB. The terminal apparatus 1 receives the RACH response in the polarization mode as used for reception of the SSB.

The terminal apparatus 1 transmits a message 3 in the polarization mode as used for transmission of the RACH. The network node receives the message 3 in the polarization mode as used for reception of the RACH.

The network node transmits a message 4 (Contention resolution) in the polarization mode as used for transmission of the SSB. The terminal apparatus 1 receives the message 4 in the polarization mode as used for reception of the SSB.

Information indicating multiple RACH occasions is notified from the base station apparatus 3 to the terminal apparatus 1 via the gateway 4 and the satellite 5. The information includes information indicating a relationship between the RACH occasions and the polarization modes.

The network node may use a different polarization mode for each of the polarization mode used for transmission and the polarization mode used for reception. The terminal apparatus 1 may use a different polarization mode for each of the polarization mode used for transmission and the polarization mode used for reception.

The base station apparatus 3 may include one of or both a Master Cell Group (MCG) and a Secondary Cell Group (SCG). The MCG is a group of serving cells at least including a Primary Cell (PCell). The SCG is a group of serving cells including at least a Primary Secondary Cell (PSCell). The PCell may be a serving cell that is given based on initial connection. The MCG may include one or multiple Secondary Cells (SCells). The SCG may include one or multiple SCells. A serving cell identity is a short identity for identifying the serving cell. The serving cell identity may be provided by a higher layer parameter.

In the radio communication system, the terminal apparatus 1 and the base station apparatus 3 may use one or multiple communication schemes. For example, in the downlink of the radio communication system, Cyclic Prefix-Orthogonal Frequency Division Multiplex (CP-OFDM) may be used. In the uplink of the radio communication system, either of CP-OFDM or Discrete Fourier Transform-spread-Orthogonal Frequency Division Multiplex (DFT-s-OFDM) may be used. Here, DFT-s-OFDM is a communication scheme in which transform precoding is applied prior to generation of a signal in CP-OFDM. Here, transform precoding is also referred to as DFT precoding.

As illustrated in FIG. 1, the base station apparatus 3 may include one transmission and/or reception apparatus (or transmission point, transmission apparatus, reception point, reception apparatus, transmission and/or reception point). In contrast, in some cases, the base station apparatus 3 may include multiple transmission and/or reception apparatuses. In a case that the base station apparatus 3 includes multiple transmission and/or reception apparatuses, the multiple transmission and/or reception apparatuses may be deployed at respective geographically different positions.

A SubCarrier Spacing (SCS) Δf for a configuration µ of a certain subcarrier spacing may be Δf = 2^{µ} × 15 kHz. For example, the configuration µ of the subcarrier spacing may indicate one of 0, 1, 2, 3, and 4.

A time unit T_{c} = 1/(Δfₘₐₓ × N_{f}) may be used for expression of a length in the time domain. Here, Δfₘₐₓ may be Δfₘₐₓ = 480 kHz. N_{f} may be N_{f} = 4096. A constant κ may be κ = Δfₘₐₓ × N_{f}/(Δf_{ref}N_{f, ref}) = 64. Δf_{ref} may be 15 kHz. N_{f, ref} is 2048.

Downlink/uplink signal transmission may be organized into a radio frame (system frame, frame) having a length Tf. Here, the following may be satisfied: T_{f} = (Δfₘₐₓ × N_{f}/100) × Tₛ = 10 ms.

Sidelink signal transmission may be organized into a radio frame (system frame, frame) having a length Tf. Here, the following may be satisfied: T_{f} = (Δfₘₐₓ × N_{f}/100) × Tₛ = 10 ms.

The radio frame may include 10 subframes. Here, the following may be satisfied: subframe length T_{sf} = (Δfₘₐₓ × N_{f}/1000) × Tₛ = 1 ms. The number of OFDM symbols per subframe may be N^{subframe, µ}_{symb} = N^{slot}_{symb} × N^{subframe, µ}ₛₗₒₜ.

As a time-domain unit in the communication scheme used for the radio communication system, the OFDM symbol is used. For example, the OFDM symbol may be used as a time-domain unit of CP-OFDM. The OFDM symbol may be used as a time-domain unit of DFT-s-OFDM.

The slot may include multiple OFDM symbols. For example, one slot may include N^{slot}_{symb} continuous OFDM symbols. For example, in a configuration of a normal CP, N^{slot}_{symb} may be N^{slot}_{symb} = 14. In a configuration of an extended CP, N^{slot}_{symb} may be N^{slot}_{symb} = 12.

The slot may be assigned an index in the time domain. For example, slot indexes n^{µ}ₛ may be given in ascending order in the subframe with integer values within a range from 0 to N^{subframe, µ}ₛₗₒₜ - 1. Slot indexes n^{µ}_{s, f} may be given in ascending order in the radio frame with integer values within a range from 0 to N^{frame, µ}ₛₗₒₜ - 1.

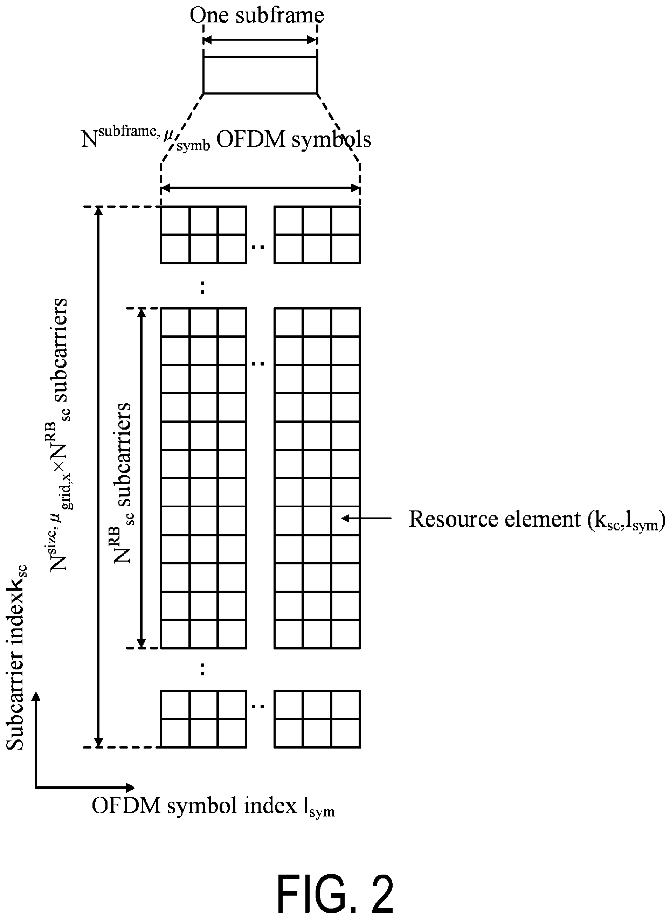

FIG. 2 is a diagram illustrating a configuration example of a resource grid according to an aspect of the present embodiment. In the resource grid of FIG. 2, the horizontal axis corresponds to an OFDM symbol index l_{sym}, and the vertical axis corresponds to a subcarrier index k_{sc}. The resource grid of FIG. 2 includes N^{size, µ}_{grid, x} × N^{RB}_{sc} subcarriers and N^{subframe, µ}_{symb} OFDM symbols. Here, N^{size, µ}_{grid, x} indicates a bandwidth of a carrier specific to the SCS. A unit of a value of N^{size, µ}_{grid, x} is a resource block.

In the resource grid, a resource identified with the subcarrier index k_{sc} and the OFDM symbol index l_{sym} is also referred to as a Resource Element (RE).

The Resource Block (RB) includes N^{RB}_{sc} continuous subcarriers. The resource block is a general term for a common resource block, a Physical Resource Block (PRB), and a Virtual Resource Block (VRB). For example, N^{RB}_{sc} may be N^{RB}_{sc} = 12.

A BandWidth Part (BWP) may be configured as a subset of the resource grid. Here, the BWP configured for the downlink is also referred to as a downlink BWP. The BWP configured for the uplink is also referred to as an uplink BWP.

In the following, a configuration example of the terminal apparatus 1 according to an aspect of the present embodiment will be described.

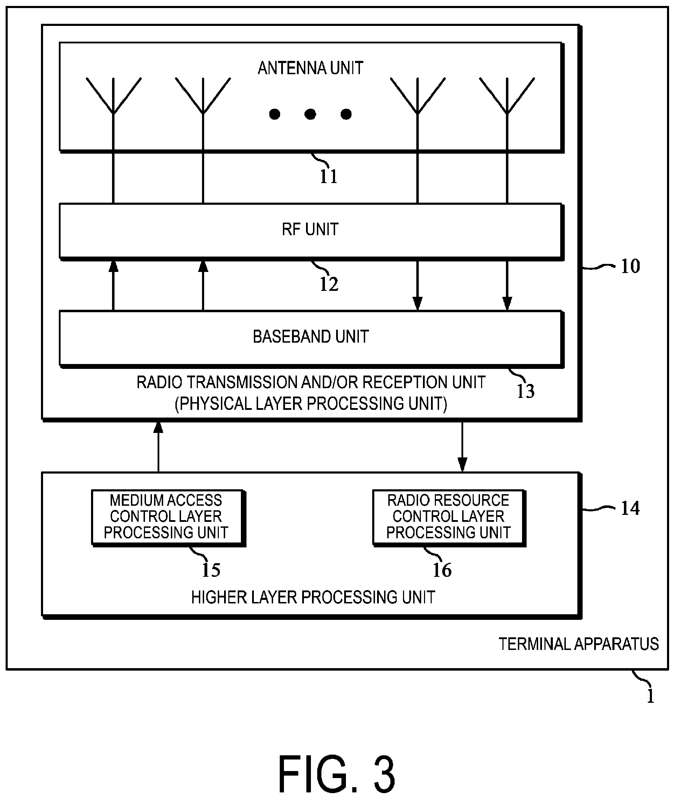

FIG. 3 is a schematic block diagram illustrating a configuration of the terminal apparatus 1 according to an aspect of the present embodiment. As illustrated in the figure, the terminal apparatus 1 includes a radio transmission and/or reception unit 10 and a higher layer processing unit 14. The radio transmission and/or reception unit 10 at least includes a part or all of an antenna unit 11, a Radio Frequency (RF) unit 12, and a baseband unit 13. The higher layer processing unit 14 at least includes a part or all of a medium access control layer processing unit 15 and a radio resource control layer processing unit 16. The radio transmission and/or reception unit 10 is also referred to as a transmitter, a receiver, or a physical layer processing unit.

The radio transmission and/or reception unit 10 performs processing of the physical layer.

For example, the radio transmission and/or reception unit 10 may generate a baseband signal of an uplink physical channel. Here, a transport block delivered on a UL-SCH from a higher layer may be mapped to the uplink physical channel. For example, the radio transmission and/or reception unit 10 may generate a baseband signal of an uplink physical signal.

For example, the radio transmission and/or reception unit 10 may attempt to detect information conveyed on a downlink physical channel. Here, a transport block in the information conveyed on the downlink physical channel may be delivered on a DL-SCH to a higher layer. For example, the radio transmission and/or reception unit 10 may attempt to detect information conveyed on a downlink physical signal.

The receiver of the terminal apparatus 1 receives a PDCCH. A reception processing unit of the terminal apparatus 1 performs processing of receiving the PDCCH in a downlink frequency band (cell, component carrier, carrier). The reception processing unit of the terminal apparatus 1 performs processing, such as demodulation and decoding, on the PDCCH. The reception processing unit of the terminal apparatus 1 performs processing of receiving the PDCCH, and performs processing of detecting downlink control information.

The receiver of the terminal apparatus 1 receives a PDSCH. The reception processing unit of the terminal apparatus 1 performs processing of receiving the PDSCH in a downlink frequency band (cell, component carrier, carrier). The reception processing unit of the terminal apparatus 1 performs processing, such as demodulation and decoding, on the PDSCH.

The transmitter (also referred to as a transmission processing unit) of the terminal apparatus 1 transmits an HARQ-ACK. The transmission processing unit of the terminal apparatus 1 transmits the HARQ-ACK for the PDSCH. The transmission processing unit of the terminal apparatus 1 transmits the HARQ-ACK in an uplink frequency band (cell, component carrier, carrier).

The transmitter of the terminal apparatus 1 transmits a random access preamble. The transmission processing unit of the terminal apparatus 1 transmits the random access preamble by using a PRACH.

The higher layer processing unit 14 outputs uplink data (transport block) generated by a user operation or the like to the radio transmission and/or reception unit 10. The higher layer processing unit 14 performs processing of an MAC layer, a Packet Data Convergence Protocol (PDCP) layer, a Radio Link Control (RLC) layer, and an RRC layer.

The medium access control layer processing unit (MAC layer processing unit) 15 included in the higher layer processing unit 14 performs processing of the MAC layer.

The radio resource control layer processing unit 16 included in the higher layer processing unit 14 performs processing of the RRC layer. The radio resource control layer processing unit 16 manages various pieces of configuration information/parameters (RRC parameters) of the terminal apparatus 1. The radio resource control layer processing unit 16 sets various pieces of configuration information/parameters (RRC parameters), based on higher layer signaling received from the base station apparatus 3. Specifically, the radio resource control layer processing unit 16 sets various pieces of configuration information/parameters (RRC parameters), based on information indicating the various pieces of configuration information/parameters (RRC parameters) received from the base station apparatus 3. Note that the configuration information may include information related to the processing or configurations of the physical channel, the physical signal (that is, the physical layer), the MAC layer, the PDCP layer, the RLC layer, and the RRC layer. The parameters may be higher layer parameters.

For example, the radio resource control layer processing unit 16 may acquire an RRC parameter included in an RRC message on a certain logical channel, and set the acquired RRC parameter in a storage area of the terminal apparatus 1. The RRC parameter set in the storage area of the terminal apparatus 1 may be provided to a lower layer.

The radio resource control layer processing unit 16 configures a control resource set, based on RRC signaling received from the base station apparatus 3. The radio resource control layer processing unit 16 configures a search space in the control resource set. The radio resource control layer processing unit 16 configures PDCCH candidates to be monitored in the control resource set. The radio resource control layer processing unit 16 configures the number of PDCCH candidates to be monitored in the control resource set. The radio resource control layer processing unit 16 configures an Aggregation level of the PDCCH candidates to be monitored in the control resource set. The radio resource control layer processing unit 16 configures a DCI format to be monitored.

The medium access control layer processing unit (MAC layer processing unit) 15 performs processing of the MAC layer, such as HARQ operation.

The radio resource control layer processing unit 16 may include function information generated based on functions of the terminal apparatus 1 in an RRC message to convey the function information to the base station apparatus 3.

The radio transmission and/or reception unit 10 performs modulation processing, coding processing, and transmission processing. The radio transmission and/or reception unit 10 generates a physical signal through coding processing, modulation processing, and baseband signal generation processing (conversion into a time-continuous signal) on data (transport block), and transmits the physical signal to the base station apparatus 3 or the terminal apparatus 1.

The radio transmission and/or reception unit 10 performs demodulation processing, decoding processing, and reception processing. The radio transmission and/or reception unit 10 outputs the transport block of the information detected based on the demodulation processing and the decoding processing on the received physical signal to the higher layer processing unit 14 on the DL-SCH.

The RF unit 12 converts (down converts) a signal received via the antenna unit 11 into a baseband signal and removes unnecessary frequency components. The RF unit 12 outputs the baseband signal to the baseband unit 13.

The baseband unit 13 converts the analog signal input from the RF unit 12 into a digital signal. The baseband unit 13 removes a part corresponding to a Cyclic Prefix (CP) from the converted digital signal. The baseband unit 13 performs Fast Fourier Transform (FFT) on the signal from which the CP is removed, and extracts a signal in the frequency domain.

The baseband unit 13 performs Inverse Fast Fourier Transform (IFFT) on the physical signal, and generates OFDM symbols. The baseband unit 13 adds CPs to the generated OFDM symbols, and generates a baseband digital signal. The baseband unit 13 converts the baseband digital signal into an analog signal. The baseband unit 13 outputs the converted analog signal to the RF unit 12.

The RF unit 12 removes unnecessary frequency components from the analog signal input from the baseband unit 13 through a low-pass filter, up converts the analog signal into a signal of a carrier frequency, and generates an RF signal. The RF unit 12 transmits the RF signal via the antenna unit 11. The RF unit 12 amplifies power. The RF unit 12 may have a function of controlling transmission power. The RF unit 12 is also referred to as a transmission power control unit.

In the following, a configuration example of the base station apparatus 3 according to an aspect of the present embodiment will be described.

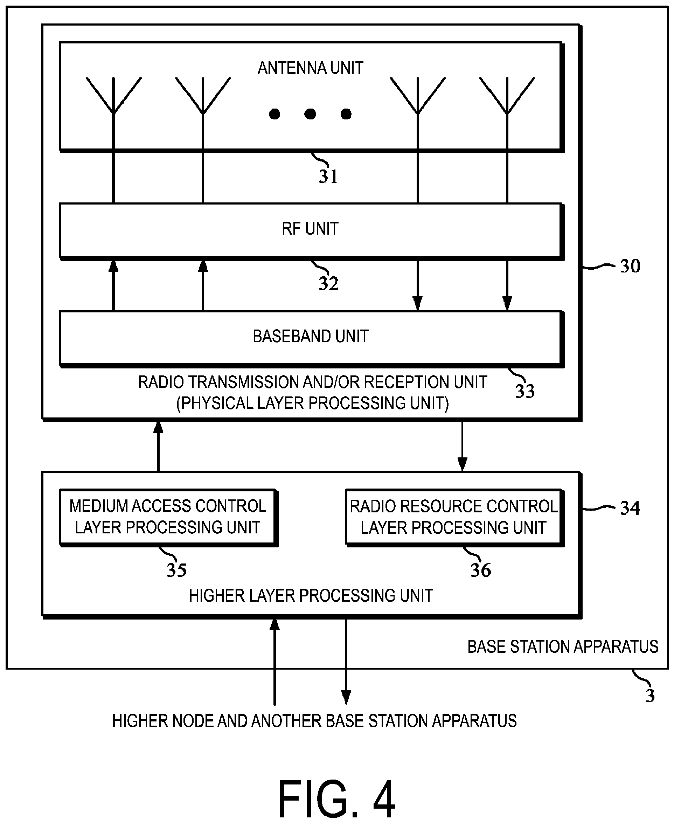

FIG. 4 is a schematic block diagram illustrating a configuration of the base station apparatus 3 according to an aspect of the present embodiment. As illustrated in the figure, the base station apparatus 3 includes a radio transmission and/or reception unit 30 and a Higher layer processing unit 34. The radio transmission and/or reception unit 30 includes an antenna unit 31, a Radio Frequency (RF) unit 32, and a baseband unit 33. The higher layer processing unit 34 includes a medium access control layer processing unit 35 and a radio resource control layer processing unit 36. The radio transmission and/or reception unit 30 is also referred to as a transmitter, a receiver, or a physical layer processing unit.

The higher layer processing unit 34 performs processing of the Medium Access Control (MAC) layer, the Packet Data Convergence Protocol (PDCP) layer, the Radio Link Control (RLC) layer, and the Radio Resource Control (RRC) layer. Here, the MAC layer is also referred to as a MAC sublayer. The PDCP layer is also referred to as a PDCP sublayer. The RLC layer is also referred to as an RLC sublayer. The RRC layer is also referred to as an RRC sublayer.

The medium access control layer processing unit 35 included in the higher layer processing unit 34 performs processing of the MAC layer. Here, the processing of the MAC layer may include a part or all of processing of mapping between a logical channel and a transport channel, multiplexing of one or multiple MAC Service Data Units (SDUs) on the transport block, decomposition of the transport block delivered from the physical layer on the UL-SCH into one or multiple MAC SDUs, application of a Hybrid Automatic Repeat reQuest (HARQ) to the transport block, and a scheduling request.

The radio resource control layer processing unit 36 included in the higher layer processing unit 34 performs processing of the RRC layer. The processing of the RRC layer may include a part or all of management of a broadcast signal, management of an RRC connected/RRC idle state, and RRC reconfiguration. The radio resource control layer processing unit 36 generates, or acquires from a higher node, downlink data (transport block) mapped to a PDSCH, system information, an RRC message, an MAC CE, and the like, and outputs the data to the radio transmission and/or reception unit 30.

The radio resource control layer processing unit 36 manages various pieces of configuration information/parameters (RRC parameters) of each terminal apparatus 1. The radio resource control layer processing unit 36 may set various pieces of configuration information/parameters for each terminal apparatus 1 through higher layer signaling. Specifically, the radio resource control layer processing unit 36 transmits/broadcasts information indicating the various pieces of configuration information/parameters. Note that the configuration information may include information related to the processing or configurations of the physical channel, the physical signal (that is, the physical layer), the MAC layer, the PDCP layer, the RLC layer, and the RRC layer. The parameters may be higher layer parameters. For example, the radio resource control layer processing unit 36 may include an RRC parameter in an RRC message on a certain logical channel to convey the RRC parameter to the terminal apparatus 1. Here, the RRC message may be mapped to one of a Broadcast Control CHannel (BCCH), a Common Control CHannel (CCCH), and a Dedicated Control CHannel (DCCH).

The radio resource control layer processing unit 36 may determine the RRC parameter to be conveyed to the terminal apparatus 1, based on the RRC parameter included in the RRC message conveyed from the terminal apparatus 1. Here, the RRC message to be conveyed from the terminal apparatus 1 may be related to a function information report of the terminal apparatus 1.

The radio resource control layer processing unit 36 configures a control resource set for the terminal apparatus 1. Multiple PDCCH candidates are configured in the configured control resource set. The radio resource control layer processing unit 36 configures a search space for the terminal apparatus 1. The radio resource control layer processing unit 36 configures a DCI format to be monitored in the search space for the terminal apparatus 1.

The radio resource control layer processing unit 36 configures a DCI format to be applied to the terminal apparatus 1 in the control resource set. The radio resource control layer processing unit 36 generates RRC signaling indicating the DCI format to be applied to the terminal apparatus 1. The radio resource control layer processing unit 36 configures one or more DCI formats to be applied in the transmission processing unit.

The radio resource control layer processing unit 36 performs configurations related to multiple search spaces. Each of the configurations related to the multiple search spaces is indexed.

The radio resource control layer processing unit 36 configures a resource for transmission of an HARQ-ACK for the terminal apparatus 1. The radio resource control layer processing unit 36 configure the resources for transmission of the HARQ-ACK for the PDSCH in a downlink frequency band (cell, component carrier, carrier). The radio resource control layer processing unit 36 configures the resource for transmission of the HARQ-ACK for the PDSCH in an uplink frequency band (cell, component carrier, carrier).

The medium access control layer processing unit (MAC layer processing unit) 35 performs processing of the MAC layer, such as HARQ operation.

The functions of the radio transmission and/or reception unit 30 are the same as those of the radio transmission and/or reception unit 10, and thus description thereof will be omitted as appropriate. The radio transmission and/or reception unit 30 performs processing of the physical layer. Here, the processing of the physical layer may include a part or all of generation of a baseband signal of a physical channel and generation of a baseband signal of a physical signal, and detection of information conveyed on a physical channel and detection of information conveyed on a physical signal. The processing of the physical layer may include mapping processing of a transport channel to a physical channel. Here, the baseband signal is also referred to as a time-continuous signal.

The radio transmission and/or reception unit 30 may perform one or both of demodulation processing and decoding processing. The radio transmission and/or reception unit 30 may deliver the transport block of the information detected based on the demodulation processing and the decoding processing on the received physical signal to the higher layer on the UL-SCH. For example, the radio transmission and/or reception unit 30 may generate a baseband signal of a downlink physical channel. Here, the transport block delivered from the higher layer on the DL-SCH may be mapped to the downlink physical channel. For example, the radio transmission and/or reception unit 30 may generate a baseband signal of a downlink physical signal.

The radio transmission and/or reception unit 30 may perform a part or all of modulation processing, coding processing, and transmission processing. The radio transmission and/or reception unit 30 may generate a physical signal, based on a part or all of coding processing, modulation processing, and baseband signal generation processing on the transport block. The radio transmission and/or reception unit 30 may map the physical signal to a certain BWP. The radio transmission and/or reception unit 30 may transmit the generated physical signal. For example, the radio transmission and/or reception unit 30 may attempt to detect information conveyed on an uplink physical channel. Here, the transport block of the information conveyed on the uplink physical channel may be delivered to the higher layer on the UL-SCH. For example, the radio transmission and/or reception unit 30 may attempt to detect information conveyed on an uplink physical signal.

The radio transmission and/or reception unit 30 recognizes the Search space (SS) configured for the terminal apparatus 1. The radio transmission and/or reception unit 30 recognizes the search space in the control resource set configured for the terminal apparatus 1. The radio transmission and/or reception unit 30 recognizes the PDCCH candidates monitored in the terminal apparatus 1, and recognizes the search space. The radio transmission and/or reception unit 30 recognizes which control channel element is included in each PDCCH candidate to be monitored in the terminal apparatus 1 (recognizes a numeral number of the control channel element included in the PDCCH candidate). The radio transmission and/or reception unit 30 includes an SS recognition unit, and the SS recognition unit recognizes the SS configured for the terminal apparatus 1. The SS recognition unit recognizes one or more PDCCH candidates in the control resource set configured as the Search space for the terminal apparatus. The SS recognition unit recognizes the PDCCH candidates included in the search space of the control resource set for the terminal apparatus 1 (the number of PDCCH candidates, a numeral number of each PDCCH candidate).

The SS recognition unit recognizes a configuration of the search space in the control resource set (the number of PDCCH candidates, OFDM symbols of the PDCCH candidates, Aggregation level of the PDCCH candidates). A transmitter (transmission processing unit) of the radio transmission and/or reception unit 30 transmits, to the terminal apparatus 1, the PDCCH by using the PDCCH candidates in the search space of the control resource set.

The transmitter (also referred to as a transmission processing unit) of the base station apparatus 3 transmits the PDCCH. The transmission processing unit of the base station apparatus 3 transmits the PDCCH by using the PDCCH candidates to be monitored in the terminal apparatus 1. The transmission processing unit of the base station apparatus 3 transmits the PDCCH by using the resources corresponding to the PDCCH candidates in the search space configured for the terminal apparatus 1. The transmission processing unit of the base station apparatus 3 transmits the PDCCH by using the PDCCH candidates of the search space, in which monitoring of the PDCCH is performed in the terminal apparatus 1, out of the multiple search spaces configured for the terminal apparatus 1.

A receiver (also referred to as a reception processing unit) of the base station apparatus 3 receives the HARQ-ACK. The reception processing unit of the base station apparatus 3 receives the HARQ-ACK for the PDSCH. The reception processing unit of the base station apparatus 3 receives the HARQ-ACK in an uplink frequency band (cell, component carrier, carrier). The reception processing unit of the base station apparatus 3 receives the HARQ-ACK for the PDSCH of a downlink frequency band (cell, component carrier, carrier) managed in the base station apparatus 3.

The RF unit 32 may convert a signal received via the antenna unit 31 into a baseband signal and remove unnecessary frequency components. The RF unit 32 outputs the baseband signal to the baseband unit 33.

The baseband unit 33 may convert the baseband signal input from the RF unit 32 into a digital baseband signal. The baseband unit 33 may remove a part corresponding to a Cyclic Prefix (CP) from the digital baseband signal. The baseband unit 33 may perform Fast Fourier Transform (FFT) on the baseband signal from which the CP is removed, and extract a signal in the frequency domain.

The baseband unit 33 may perform Inverse Fast Fourier Transform (IFFT) on the physical signal, and thereby generate a baseband signal. The baseband unit 33 may add a CP to the generated baseband signal. The baseband unit 33 may convert the baseband signal to which the CP is added into an analog baseband signal. The baseband unit 33 may output the analog baseband signal to the RF unit 32.

The RF unit 32 may remove unnecessary frequency components from the baseband signal input from the baseband unit 33. The RF unit 32 may up convert the baseband signal into a signal of a carrier frequency, and generate an RF signal. The RF unit 32 may transmit the RF signal via the antenna unit 31. The RF unit 32 may have a function of controlling transmission power.

Each of the units denoted by the reference sign 10 to the reference sign 16 included in the terminal apparatus 1 may be configured as a circuit. Each of the units denoted by the reference sign 30 to the reference sign 36 included in the base station apparatus 3 may be configured as a circuit.

The satellite 5 (network node) includes at least a part of the functions of the radio transmission and/or reception unit 30 of the base station apparatus 3 described above. For example, the satellite 5 transmits information indicating association between the RACH occasion and the polarization mode. For example, the satellite 5 receives a RACH in the reception device supporting linear polarization in a RACH occasion associated with linear polarization. For example, the satellite 5 receives a RACH in the reception device supporting horizontal polarization in a RACH occasion associated with horizontal polarization. For example, the satellite 5 receives a RACH in the reception device supporting vertical polarization in a RACH occasion associated with vertical polarization. For example, the satellite 5 receives a RACH in the reception device supporting circular polarization in a RACH occasion associated with circular polarization. For example, the satellite 5 receives a RACH in the reception device supporting right-hand circular polarization in a RACH occasion associated with right-hand circular polarization. For example, the satellite 5 receives a RACH in the reception device supporting left-hand circular polarization in a RACH occasion associated with left-hand circular polarization.

The satellite 5 (network node) includes at least a part of the functions of the radio transmission and/or reception unit 30 of the base station apparatus 3 described above. For example, the terminal apparatus 1 receives information indicating association between the RACH occasion and the polarization mode. For example, the terminal apparatus 1 supporting linear polarization transmits a RACH in the transmission device supporting linear polarization in a RACH occasion associated with linear polarization. For example, the terminal apparatus 1 supporting horizontal polarization transmits a RACH in the transmission device supporting horizontal polarization in a RACH occasion associated with horizontal polarization. For example, the terminal apparatus 1 supporting vertical polarization transmits a RACH in the transmission device supporting vertical polarization in a RACH occasion associated with vertical polarization. For example, the terminal apparatus 1 supporting circular polarization transmits a RACH in the transmission device supporting circular polarization in a RACH occasion associated with circular polarization. For example, the terminal apparatus 1 supporting right-hand circular polarization transmits a RACH in the transmission device supporting right-hand circular polarization in a RACH occasion associated with right-hand circular polarization. For example, the terminal apparatus 1 supporting left-hand circular polarization transmits a RACH in the transmission device supporting left-hand circular polarization in a RACH occasion associated with left-hand circular polarization.

In the following, physical channels and physical signals according to various aspects of the present embodiment will be described. Note that, for the sake of convenience of description, description will be given as appropriate based on an assumption that a signal transmitted from the base station apparatus 3 via the gateway 4 and the satellite 5 is a signal transmitted from the base station apparatus 3 to the terminal apparatus 1. Note that, for the sake of convenience of description, description will be given as appropriate based on an assumption that a signal received by the base station apparatus 3 via the satellite 5 and the gateway 4 is a signal from the terminal apparatus 1 received by the base station apparatus 3.

The physical signal is a general term for a downlink physical channel, a downlink physical signal, an uplink physical channel, and an uplink physical channel. The physical channel is a general term for a downlink physical channel and an uplink physical channel. The physical signal is a general term for a downlink physical signal and an uplink physical signal.

The uplink physical channel may correspond to a set of resource elements for carrying information that is generated in a higher layer. The uplink physical channel is a physical channel used in the uplink component carrier. The uplink physical channel may be transmitted by the radio transmission and/or reception unit 10. The uplink physical channel may be received by the radio transmission and/or reception unit 30. In the radio communication system according to an aspect of the present embodiment, at least a part or all of the following uplink physical channels are used.
- Physical Uplink Control CHannel (PUCCH)
- Physical Uplink Shared CHannel (PUSCH)
- Physical Random Access CHannel (PRACH)

The PUCCH may be used to transmit (convey) Uplink Control Information (UCI). The uplink control information may be mapped to the PUCCH. The radio transmission and/or reception unit 10 may transmit the PUCCH to which the uplink control information is mapped. The radio transmission and/or reception unit 30 may receive the PUCCH to which the uplink control information is mapped.

The uplink control information (uplink control information bit, uplink control information sequence, uplink control information type) includes a part or all of Channel State Information (CSI), a Scheduling Request (SR), and Hybrid Automatic Repeat request ACKnowledgement (HARQ-ACK) information. Note that the uplink control information may include information not described in the above.

The channel state information is also referred to as a channel state information bit or a channel state information sequence. The scheduling request is also referred to as a scheduling request bit or a scheduling request sequence. The HARQ-ACK information is also referred to as an HARQ-ACK information bit or an HARQ-ACK information sequence.

The HARQ-ACK information may include HARQ-ACK bit(s) corresponding to one Transport block (TB). The HARQ-ACK bit(s) may indicate an acknowledgement (ACK) or a negative-acknowledgement (NACK) corresponding to the transport block. The ACK may indicate that decoding of the transport block has been completed successfully (has been decoded). The NACK may indicate that decoding of the transport block has not completed successfully (has not been decoded). The HARQ-ACK information may include one or multiple HARQ-ACK bits.

The HARQ-ACK for the transport block is also referred to as an HARQ-ACK for the PDSCH. Here, the "HARQ-ACK for the PDSCH" may indicate an HARQ-ACK for the transport block included in the PDSCH.

The scheduling request may be used to request resources of the UL-SCH for initial transmission. The scheduling request bit may be used for indicating one of a positive SR or a negative SR. A fact that the scheduling request bit indicates the positive SR is also referred to as "the positive SR is transmitted (conveyed)". The positive SR may indicate that a resource of the UL-SCH for initial transmission is requested by the terminal apparatus 1. A fact that the scheduling request bit indicates the negative SR is also referred to as "the negative SR is transmitted (conveyed)". The negative SR may indicate that the resource of the UL-SCH for initial transmission is not requested by the terminal apparatus 1.

The channel state information may include some or all of a Channel Quality Indicator (CQI), a Precoder Matrix Indicator (PMI), and a Rank Indicator (RI). The CQI is an indicator related to quality (for example, propagation strength) of a channel or quality of a physical channel, and the PMI is an indicator related to a precoder. The RI is an indicator related to a transmission rank (or the number of transmission layers).

The channel state information is an indicator related to a reception state of the physical signal (for example, a CSI-RS) used for channel measurement. A value of the channel state information may be determined by the terminal apparatus 1, based on the reception state assumed by the physical signal used for channel measurement. Channel measurement may include interference measurement.

The PUCCH may include a certain PUCCH format. Here, the PUCCH format may be a format of processing of the physical layer of the PUCCH. The PUCCH format may be a format of information to be transmitted using the PUCCH.

The PUSCH may be transmitted to convey one or both of the uplink control information and the transport block. The PUSCH may be used to convey one or both of the uplink control information and the transport block. The PUSCH may be used to transmit at least some or all of the transport block, the HARQ-ACK, the channel state information, and the scheduling request. The PUSCH is used at least to transmit a random access message 3. The PUSCH may be used to transmit information not described in the above. The terminal apparatus 1 may transmit the PUSCH to which one or both of the uplink control information and the transport block is mapped. The base station apparatus 3 may receive the PUSCH to which one or both of the uplink control information and the transport block is mapped.

The PRACH may be transmitted to convey an index (random access message 1) of the random access preamble. The terminal apparatus 1 may transmit the PRACH. The base station apparatus 3 may receive the PRACH. The terminal apparatus 1 may transmit the random access preamble on the PRACH. The base station apparatus 3 may receive the random access preamble on the PRACH.

The PRACH is used at least to transmit a random access preamble (random access message 1). The PRACH may be used at least to indicate some or all of an initial connection establishment procedure, a handover procedure, a connection re-establishment procedure, synchronization for PUSCH transmission (timing adjustment), and a resource request for the PUSCH.

The uplink physical signal may correspond to a set of resource elements. The uplink physical signal need not be used to convey information generated in the higher layer. Note that the uplink physical signal may be used to convey information generated in the physical layer. The uplink physical signal may be a physical signal used in the uplink component carrier. The radio transmission and/or reception unit 10 may transmit the uplink physical signal. The radio transmission and/or reception unit 30 may receive the uplink physical signal. In the uplink of the radio communication system according to an aspect of the present embodiment, a part or all of the following uplink physical signals may be used.
- UpLink Demodulation Reference Signal (UL DMRS)
- Sounding Reference Signal (SRS)
- UpLink Phase Tracking Reference Signal (UL PTRS)

The UL DMRS is a general term for a DMRS for the PUSCH and a DMRS for the PUCCH.

A set of antenna ports of the DMRS for the PUSCH (DMRS related to the PUSCH, DMRS included in the PUSCH, DMRS corresponding to the PUSCH) may be given based on a set of antenna ports for the PUSCH. For example, the set of antenna ports of the DMRS for the PUSCH may be the same as a set of antenna ports of the PUSCH.

A channel (propagation path) of the PUSCH may be inferred from the DMRS for the PUSCH.

A set of antenna ports of the DMRS for the PUCCH (DMRS related to the PUCCH, DMRS included in the PUCCH, DMRS corresponding to the PUCCH) may be the same as a set of antenna ports of the PUCCH.

A channel of the PUCCH may be inferred from the DMRS for the PUCCH.

The downlink physical channel may correspond to a set of resource elements for conveying information generated in the higher layer. The downlink physical channel may be a physical channel used in a downlink component carrier. The radio transmission and/or reception unit 30 may transmit the downlink physical channel. The radio transmission and/or reception unit 10 may receive the downlink physical channel. In the downlink of the radio communication system according to an aspect of the present embodiment, a part or all of the following downlink physical channels may be used.
- Physical Broadcast Channel (PBCH)
- Physical Downlink Control Channel (PDCCH)
- Physical Downlink Shared Channel (PDSCH)

The PBCH is transmitted to convey one or both of a Master Information Block (MIB) and physical layer control information. Here, the physical layer control information is information generated in the physical layer. The MIB is an RRC message delivered from the higher layer on a Broadcast Control CHannel (BCCH).

The PDCCH is used at least to transmit (convey) Downlink Control Information (DCI). The downlink control information may be mapped to the PDCCH. The terminal apparatus 1 may receive the PDCCH to which the downlink control information is mapped. The base station apparatus 3 may transmit the PDCCH to which the downlink control information is mapped.

The downlink control information may be transmitted with a DCI format. Note that the DCI format may be interpreted as a format of the downlink control information. The DCI format may be interpreted as a set of pieces of downlink control information set to a format of certain downlink control information.

The base station apparatus 3 may notify the terminal apparatus 1 of the downlink control information by using the PDCCH with the DCI format. Here, the terminal apparatus 1 may monitor the PDCCH for acquisition of the downlink control information. Note that, unless otherwise noted, the DCI format and the downlink control information may be equivalent to each other in description. For example, the base station apparatus 3 may include the downlink control information in the DCI format to convey the downlink control information to the terminal apparatus 1. The terminal apparatus 1 may control the radio transmission and/or reception unit 10 by using the downlink control information included in the detected DCI format.

The downlink control information may include at least either a downlink (DL) grant or an uplink (UL) grant. The DCI format used for scheduling the PDSCH is also referred to as a downlink DCI format. The DCI format used for scheduling the PUSCH is also referred to as an uplink DCI format. The downlink grant is also referred to as downlink (DL) assignment or downlink (DL) allocation.

DCI format 0_0, DCI format 0_1, DCI format 1_0, DCI format 1_1, and the like are the DCI formats. An uplink DCI format is a general term for DCI format 0_0, DCI format 0_1, and the like. A downlink DCI format is a general term for DCI format 1_0, DCI format 1_1, and the like.

DCI format 0_0 is used for scheduling of the PUSCH mapped to a certain cell. DCI format 0_1 is used for scheduling of the PUSCH mapped to a certain cell. DCI format 1_0 is used for scheduling of the PDSCH mapped to a certain cell. DCI format 1_1 is used for scheduling of the PDSCH mapped to a certain cell.

An Identifier for DCI formats field indicating whether the DCI format is an uplink DCI format or a downlink DCI format may be included in the DCI format. A Frequency domain resource assignment field indicating resource assignment in the frequency domain may be included in the DCI format. A Time domain resource assignment field indicating resource assignment in the time domain may be included in the DCI format. A Frequency hopping flag field indicating whether frequency hopping is to be applied may be included in the DCI format. A Modulation and Coding Scheme field (MCS field) indicating one or both of a channel modulation scheme and a target coding rate may be included in the DCI format. A CSI request field indicating an indication of a CSI report may be included in the DCI format. A BWP field indicating a BWP to which a channel is mapped may be included in the DCI format. A PDSCH to HARQ feedback timing indicator field indicating timing at which the HARQ-ACK is transmitted may be included in the DCI format. A PUCCH resource indicator field indicating resources of the PUCCH may be included in the DCI format. Note that various DCI formats may further include fields different from the fields described above.

The downlink grant is used at least for scheduling of a single PDSCH in a single serving cell. The downlink grant is at least used for scheduling of the PDSCH in the same slot as the slot in which the downlink grant is transmitted. The downlink grant may be used for scheduling of the PDSCH within a slot different from the slot in which the downlink grant has been transmitted. The uplink grant is used at least for scheduling of a single PUSCH in a single serving cell.

The PDSCH may be transmitted for conveying the transport block. The PDSCH may be used for conveying the transport block. The transport block may be mapped to the PDSCH. The base station apparatus 3 may transmit the PDSCH to which the transport block is mapped. The terminal apparatus 1 may receive the PDSCH to which the transport block is mapped.

The downlink physical signal may correspond to a set of resource elements. The downlink physical signal need not be used to convey information generated in the higher layer. Note that the downlink physical signal may be used to convey information generated in the physical layer. The downlink physical signal may be a physical signal used in the downlink component carrier. The radio transmission and/or reception unit 10 may receive the downlink physical signal. The radio transmission and/or reception unit 30 may transmit the downlink physical signal. In the downlink of the radio communication system according to an aspect of the present embodiment, at least a part or all of the following downlink physical signals may be used.
- Synchronization Signal (SS)
- DownLink DeModulation Reference Signal (DL DMRS)
- Channel State Information-Reference Signal (CSI-RS)
- DownLink Phase Tracking Reference Signal (DL PTRS)

The synchronization signal is used by the terminal apparatus 1 to establish synchronization with a downlink frequency domain and/or time domain. The synchronization signal is a general term for the Primary Synchronization Signal (PSS) and the Secondary Synchronization Signal (SSS).

An SS block (SS/PBCH block) includes at least some or all of the PSS, the SSS, and the PBCH.

The PSS, the SSS, the PBCH, and the antenna port of the DMRS for the PBCH may be the same.

The PBCH on which the symbol of the PBCH in a certain antenna port is conveyed may be inferred by the DMRS for the PBCH mapped to the slot to which the PBCH is mapped and for the PBCH included in the SS/PBCH block including the PBCH.

The DL DMRS is a general term for a DMRS for the PBCH, a DMRS for the PDSCH, and a DMRS for the PDCCH.

A set of antenna ports of the DMRS for the PDSCH (DMRS related to the PDSCH, DMRS included in the PDSCH, DMRS corresponding to the PDSCH) may be given based on a set of antenna ports for the PDSCH. For example, the set of antenna ports of the DMRS for the PDSCH may be the same as the set of antenna ports for the PDSCH.

A channel of the PDSCH may be inferred from the DMRS for the PDSCH. In a case that a set of resource elements in which the symbol of a certain PDSCH is conveyed and a set of resource elements in which the symbol of the DMRS for the certain PDSCH is conveyed are included in the same Precoding Resource Group (PRG), the PDSCH on which the symbol of the PDSCH in a certain antenna port is conveyed may be inferred by the DMRS for the PDSCH.

The antenna port of the DMRS for the PDCCH (DMRS related to the PDCCH, DMRS included in the PDCCH, DMRS corresponding to the PDCCH) may be the same as the antenna port for the PDCCH.

A channel of the PDCCH may be inferred from the DMRS for the PDCCH. In a case that the same precoder is applied to a set of resource elements in which the symbol of a certain PDCCH is conveyed and a set of resource elements in which the symbol of the DMRS for the certain PDCCH is conveyed (assumed to be applied), the PDCCH on which the symbol of the PDCCH in a certain antenna port is conveyed may be inferred by the DMRS for the PDCCH.

A Broadcast CHannel (BCH), an Uplink-Shared CHannel (UL-SCH), and a Downlink-Shared CHannel (DL-SCH) are transport channels.

The BCH of a transport layer may be mapped to the PBCH of the physical layer. In other words, the transport block delivered from the higher layer on the BCH of the transport layer may be mapped to the PBCH of the physical layer. The UL-SCH of the transport layer may be mapped to the PUSCH of the physical layer.

The transport layer may apply a Hybrid Automatic Repeat reQuest (HARQ) to the transport block.

A Broadcast Control CHannel (BCCH), a Common Control CHannel (CCCH), and a Dedicated Control CHannel (DCCH) are logical channels. For example, the BCCH may be used to deliver an RRC message including the MIB or an RRC message including the system information. The CCCH may be used to transmit an RRC message including the RRC parameters common in multiple terminal apparatuses 1. Here, the CCCH may be, for example, used for a terminal apparatus 1 that is not in a state of RRC connection. The DCCH may be used to transmit an RRC message dedicated to a certain terminal apparatus 1. Here, the DCCH may be, for example, used for the terminal apparatus 1 that is in a state of RRC connection.

The BCCH may be mapped to the BCH or the DL-SCH. In other words, the RRC message including information of the MIB may be delivered to the BCH. The RRC message including the system information other than the MIB may be delivered to the DL-SCH. The CCCH is mapped to the DL-SCH or the UL-SCH. In other words, the RRC message mapped to the CCCH may be delivered to the DL-SCH or the UL-SCH. The DCCH may be mapped to the DL-SCH or the UL-SCH. In other words, the RRC message mapped to the DCCH may be delivered to the DL-SCH or the UL-SCH.

The UL-SCH may be mapped to the PUSCH. The DL-SCH may be mapped to the PDSCH. The BCH may be mapped to the PBCH.

The medium access control layer processing unit 15 may perform a random access procedure.

For example, the downlink control information including the downlink grant or the uplink grant is transmitted and/or received on the PDCCH, along with a Cell-Radio Network Temporary Identifier (C-RNTI).

One physical channel may be mapped to one serving cell. A single physical channel may be mapped to a single BWP configured to a single carrier included in a single serving cell.

In the terminal apparatus 1, one or multiple Control Resource SETs (CORESETs) may be configured. The terminal apparatus 1 monitors the PDCCH in the one or multiple control resource sets. Here, monitoring of the PDCCH in the one or multiple control resource sets may include monitoring of one or multiple PDCCHs corresponding to the one or multiple control resource sets, respectively. Note that the PDCCH may include a set of one or multiple PDCCH candidates and/or one or multiple PDCCH candidates. Also, monitoring of the PDCCH may include monitoring and detecting the PDCCH and/or a DCI format transmitted via the PDCCH.

Multiple control resource sets may be configured for the terminal apparatus 1 and an index (control resource set index) may be provided for each of the control resource sets. One or more control channel elements (CCEs) may be configured in the control resource set and an index (CCE index) may be provided for each of the CCEs.

The set of PDCCH candidates monitored by the terminal apparatus 1 is defined from the perspective of the Search space. In other words, the set of PDCCH candidates monitored by the terminal apparatus 1 is given by the search space.

The search space may include one or multiple PDCCH candidates of one or multiple Aggregation levels. The aggregation level of the PDCCH candidates may indicate the number of CCEs constituting the PDCCH. The PDCCH candidate may be mapped to one or multiple CCEs.

The search space set may at least include one or multiple search spaces. An index (search space index) may be provided for each of the search spaces.

Each search space set may be associated at least with one control resource set. Each search space set may be included in one control resource set. For each of the search space sets, the index of the control resource set related to the search space set may be given.

The terminal apparatus 1 performs blind detection on the PDCCH candidates included in the search space in the control resource set, and can thereby detect the PDCCH and/or the DCI for the terminal apparatus 1.

In various aspects of the present embodiment, the number of resource blocks indicates the number of resource blocks in the frequency domain unless otherwise specified.

The terminal apparatus 1 transmits the uplink control information (UCI) to the base station apparatus 3. The terminal apparatus 1 may multiplex the UCI on the PUCCH and transmit the PUCCH. The terminal apparatus 1 may multiplex the UCI on the PUSCH and transmit the PUSCH. The UCI may include at least one of downlink Channel State Information (CSI), a Scheduling Request (SR) indicating a request for a PUSCH resource, and Hybrid Automatic Repeat request ACKnowledgement (HARQ-ACK) for downlink data (a Transport block, a Medium Access Control Protocol Data Unit (MAC PDU), a Downlink-Shared Channel (DL-SCH), a Physical Downlink Shared Channel (PDSCH)).

The HARQ-ACK may also be referred to as an ACK/NACK, HARQ feedback, HARQ-ACK feedback, an HARQ response, an HARQ-ACK response, HARQ information, HARQ-ACK information, HARQ control information, and HARQ-ACK control information.

In a case that data is successfully decoded, an ACK for the data is generated. In a case that data is not successfully decoded, a NACK for the data is generated. The HARQ-ACK may include at least an HARQ-ACK bit corresponding at least to one transport block. The HARQ-ACK bit may indicate an ACKnowledgement (ACK) or a Negative-ACKnowledgement (NACK) corresponding to one or multiple transport blocks. The HARQ-ACK may include at least an HARQ-ACK codebook including one or multiple HARQ-ACK bits. The fact that the HARQ-ACK bit corresponds to one or multiple transport blocks may mean that the HARQ-ACK bit corresponds to the PDSCH including the one or multiple transport blocks.

HARQ control for one transport block may be referred to as an HARQ process. One HARQ process identifier may be provided for each HARQ process. A field indicating the HARQ process identifier (HARQ process number) is included in the DCI format.

For each HARQ process, a New Data Indicator (NDI) is indicated in the DCI format. For example, a NDI field is included in the DCI format (DL assignment) including the scheduling information of the PDSCH. The size of the NDI field is 1 bit. The terminal apparatus 1 stores the value of the NDI for each HARQ process. The base station apparatus 3 stores the value of the NDI for each HARQ process for each terminal apparatus 1. The terminal apparatus 1 updates the value of the NDI stored by using the NDI field in the detected DCI format. The base station apparatus 3 configures, in the NDI field of the DCI format, the updated value of the NDI or the value of the NDI that is not updated and transmits the DCI format to the terminal apparatus 1. For the HARQ process corresponding to the value of the HARQ process identifier field of the detected DCI format, the terminal apparatus 1 updates the value of the NDI stored by using the NDI field of the detected DCI format.

The terminal apparatus 1 determines whether the received transport block is newly transmitted or retransmitted, based on the value of the NDI field of the DCI format (DL assignment). In a case that the value of the NDI field of the detected DCI format is toggled in comparison with the value of the previously received NDI for a transport block of a certain HARQ process, the terminal apparatus 1 determines the transport block received to have been newly transmitted. In a case of transmitting a transport block for new transmission in a certain HARQ process, the base station apparatus 3 toggles the value of the NDI stored for the HARQ process and transmits the toggled NDI to the terminal apparatus 1. In a case of transmitting a transport block for retransmission in the certain HARQ process, the base station apparatus 3 does not toggle the value of the NDI stored for the HARQ process and transmits, to the terminal apparatus 1, the NDI that is not toggled. In a case that the value of the NDI field of the detected DCI format is not toggled (remains the same) in comparison with the value of the previously received NDI for a transport block of a certain HARQ process, the terminal apparatus 1 determines the transport block received to have been retransmitted. Note that here, "to toggle" means to switch to a different value.

The terminal apparatus 1 may report HARQ-ACK information to the base station apparatus 3 by using the HARQ-ACK codebook in the slot indicated by a value of the HARQ indicator field included in DCI format 1_0 or DCI format 1_1 corresponding to PDSCH reception.

The terminal apparatus 1 may report the HARQ-ACK information for PDSCH reception of slot n, using PUCCH transmission and/or PUSCH transmission in slot n + k. Here, k may be the number of slots indicated by the HARQ indicator field included in the DCI format corresponding to the PDSCH reception. In a case that the HARQ indicator field is not included in the DCI format, k may be given by a higher layer parameter.

A higher layer parameter is a parameter included in higher layer signaling. The higher layer signaling may be Radio Resource Control (RRC) signaling, or may be a Medium Access Control Control Element (MAC CE). Here, the higher layer signaling may be a signal of an RRC layer, or may be a signal of an MAC layer.

The higher layer signaling may be common RRC signaling. The common RRC signaling may at least include a part or all of the following feature C1 to feature C3. Feature C1) Being mapped to a BCCH logical channel or a CCCH logical channel Feature C2) Including at least a radioResourceConfigCommon information element Feature C3) Being mapped to a PBCH

The radioResourceConfigCommon information element may include information indicating a configuration commonly used in a serving cell. The configuration used in a serving cell in common may at least include configuration of the PRACH. The configuration of the PRACH may at least indicate one or multiple random access preamble indexes. The configuration of the PRACH may at least indicate time/frequency resources of the PRACH.

The radioResourceConfigCommon information element (RRC signaling) includes information indicating a configuration of Random access. The configuration of Random access includes information indicating a relationship between a RACH occasion and a polarization mode and the like. The RACH occasion may be indicated in a format of PRACH Configuration Index. PRACH Configuration includes a RACH Preamble format, a Starting symbol indicating a start position of a symbol to which the RACH is mapped in a Slot, a PRACH duration, a RACH occasion, and the like. Multiple PRACH Configurations are configured in advance, and an index referred to as PRACH Configuration Index is given to each of the PRACH Configurations. The RACH occasion is indicated by information indicating a Subframe number to which the RACH is mapped. For example, as the information indicating a relationship between the RACH occasions and the polarization modes, information indicating PRACH Configuration Index 25 and right polarization and PRACH Configuration Index 26 and left polarization are indicated. For PRACH Configuration Index 25, RACH occasions are configured for the Subframes having Subframe numbers of 0, 2, 3, 6, and 8. For PRACH Configuration Index 26, RACH occasions are configured for the Subframes having Subframe numbers of 1, 3, 5, 7, and 9. The terminal apparatus 1 supporting the right polarization mode transmits the RACH in one of the RACH occasions in the Subframes having Subframe numbers of 0, 2, 3, 6, and 8. The terminal apparatus 1 supporting the left polarization mode transmits the RACH in one of the RACH occasions in the Subframes having Subframe numbers of 1, 3, 5, 7, and 9. Note that, in the PRACH Configuration, RACH occasions for certain 10 Subframes are indicated, and the RACH occasions are repeated every 10 Subframes.

The higher layer signaling may be dedicated RRC signaling. The dedicated RRC signaling may at least include a part or all of the following features D1 to D2. Feature D1) Being mapped to a DCCH logical channel
Feature D2) Including at least a radioResourceConfigDedicated information element

The radioResourceConfigDedicated information element may include at least information indicating a configuration specific to the terminal apparatus 1. The radioResourceConfigDedicated information element may include at least information indicating a BWP configuration. The BWP configuration may indicate at least a frequency resource of the BWP.

For example, a MIB, first system information, and second system information may be included in the common RRC signaling. In addition, a higher layer message that is mapped to the DCCH logical channel and includes at least radioResourceConfigCommon information element may be included in the common RRC signaling. In addition, a higher layer message that is mapped to the DCCH logical channel and does not include the radioResourceConfigCommon information element may be included in the dedicated RRC signaling. In addition, a higher layer message that is mapped to the DCCH logical channel and includes at least the radioResourceConfigDedicated information element may be included in the dedicated RRC signaling.

The first system information may include at least information related to a PRACH resource. The first system information may include information indicating a configuration of Random access. The first system information may include at least information related to a configuration of initial connection. The second system information may be system information other than the first system information.

The radioResourceConfigDedicated information element may include at least information related to a PRACH resource. The radioResourceConfigDedicated information element may include at least information related to the configuration of initial connection.

The Information relating to reception of the PDCCH may include information relating to an ID for indicating the destination of the PDCCH. The ID for indicating the destination of the PDCCH may be an ID used for scrambling the CRC bits to be added to the PDCCH. The ID for indicating the destination of the PDCCH is also referred to as a Radio Network Temporary Identifier (RNTI). Information related to reception of the PDCCH may include information related to the ID used for scrambling the CRC bits to be added to the PDCCH. The terminal apparatus 1 may attempt to receive the PDCCH based on at least the information relating to the ID included in the PBCH.

The RNTI may include a Common-RNTI (C-RNTI), a Temporary C-RNTI (TC-RNTI), and a Random Access-RNTI (RA-RNTI). The C-RNTI is used at least for scheduling of user data to the terminal apparatus 1 in RRC connection. The Temporary C-RNTI is used at least for scheduling of a random access message 4. The Temporary C-RNTI is used at least for scheduling of the PDSCH including data to be mapped to a CCCH in the logical channel. The RA-RNTI is used at least for scheduling of the random access message 2.

The PDSCH is used at least to transmit/receive the transport block. The PDSCH may be used at least to transmit/receive a random access message 2 (random access response). The PDSCH may be used at least to transmit/receive system information including parameters used for initial access. The PDSCH may be used at least to transmit/receive the random access message 4.

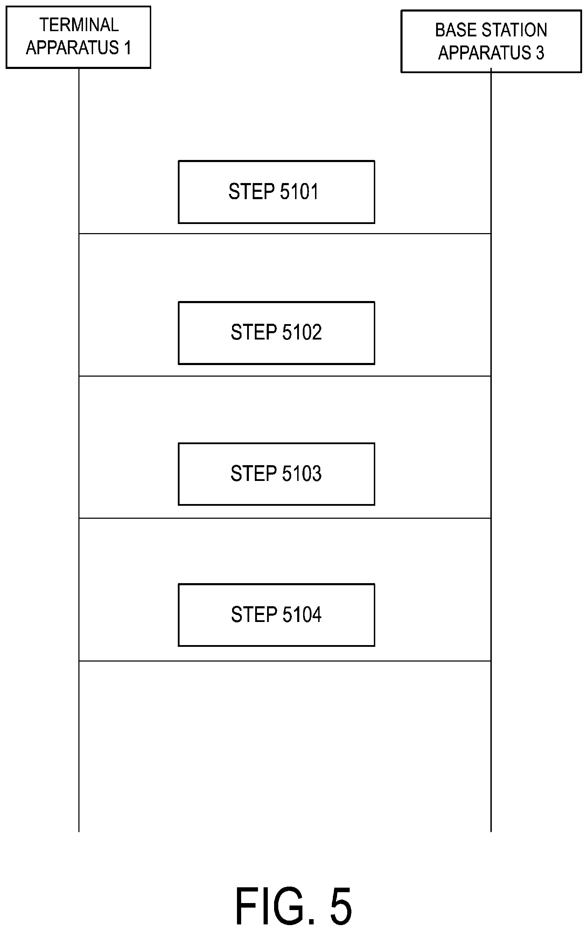

The terminal apparatus 1 in RRC idle attempts to establish connection with the base station apparatus 3 via the satellite 5. FIG. 5 is a diagram illustrating an example of an initial connection procedure (4-step contention based RACH procedure) according to an aspect of the present embodiment. The initial connection procedure includes at least some of Steps 5101 to 5104.

The terminal apparatus 1 performs downlink time-frequency synchronization prior to performing step 5101. A synchronization signal (SSB) is used for the terminal apparatus 1 to perform downlink time-frequency synchronization. The terminal apparatus 1 uses the synchronization signal transmitted from the satellite 5.

The synchronization signal including an ID of a target cell (cell ID) may be transmitted. The synchronization signal including a sequence generated at least based on the cell ID may be transmitted. The synchronization signal including the cell ID may mean that the sequence of the synchronization signal is given based on the cell ID. The synchronization signal may be transmitted with application of a beam.

The beam exhibits a phenomenon in which antenna gain varies depending on directions. The beam may be given at least based on the directivity of an antenna. In addition, the beam may also be given at least based on a phase transformation of a carrier signal. In addition, the beam may also be given by the application of the precoder.

Step 5101 is a step in which the terminal apparatus 1 transmits a RACH to the base station apparatus 3 via the satellite 5. The SSB and the RACH occasion are associated with each other. Multiple RACH occasions are associated with the SSB. The terminal apparatus 1 selects a RACH occasion for transmitting the RACH out of the multiple RACH occasions corresponding to the detected SSB. The multiple RACH occasions are associated with the polarization modes. The terminal apparatus 1 that has received the information indicating a relationship (association) between the RACH occasions and the polarization modes recognizes each polarization mode corresponding to a respective one of the RACH occasions. The terminal apparatus 1 selects a RACH occasion corresponding to a polarization mode to be used for transmission, and transmits the RACH in the selected RACH occasion.

For example, the polarization modes are associated with the multiple RACH occasions in order of linear polarization, right-hand circular polarization, and left-hand circular polarization. For example, linear polarization is associated with RACH occasion 1, right-hand circular polarization is associated with RACH occasion 2, left-hand circular polarization is associated with RACH occasion 3, linear polarization is associated with RACH occasion 4, right-hand circular polarization is associated with RACH occasion 5, and left-hand circular polarization is associated with RACH occasion 6. In other words, three polarization modes are associated with the RACH occasions in order. For example, with six RACH occasions being one pattern, a first RACH occasion is associated with linear polarization, a second RACH occasion is associated with linear polarization, a third RACH occasion is associated with right-hand circular polarization, a fourth RACH occasion is associated with left-hand circular polarization, and a fifth RACH occasion is associated with left-hand circular polarization.

Step 5102 is a step in which the base station apparatus 3 performs a response to the random access message 1 to the terminal apparatus 1 via the satellite 5. The response is also referred to as the random access message 2. The random access message 2 may be transmitted via the PDSCH. The PDSCH including the random access message 2 is scheduled by the PDCCH. The CRC bits included in the PDCCH may be scrambled by the RA-RNTI. The random access message 2 may be transmitted with a special uplink grant included therein. The special uplink grant is also referred to as a random access response grant. The special uplink grant may be included in the PDSCH including the random access message 2. The random access response grant may include at least a Temporary C-RNTI.

Step 5103 is a step in which the terminal apparatus 1 transmits, to the target cell, a request for RRC connection. The request for RRC connection is also referred to as a random access message 3. The random access message 3 may be transmitted via the PUSCH scheduled by the random access response grant. The random access message 3 may include an ID used to identify the terminal apparatus 1. The ID may be an ID managed by a higher layer. The ID may be a SAE Temporary Mobile Subscriber Identity (S-TMSI). The ID may be mapped to the CCCH in the logical channel.

Step 5104 is a step in which the base station apparatus 3 transmits a Contention resolution message to the terminal apparatus 1 via the satellite 5. The contention resolution message is also referred to as the random access message 4. The terminal apparatus 1, after transmitting the random access message 3, monitors the PDCCH that performs scheduling of the PDSCH including the random access message 4. The random access message 4 may include a contention avoidance ID. Here, the contention avoidance ID is used to resolve a contention in which multiple terminal apparatuses 1 transmit signals by using a same radio resource. The contention avoidance ID is also referred to as a UE contention resolution identity.

In step 5104, the terminal apparatus 1 which has transmitted the random access message 3 including the ID used for identifying the terminal apparatus 1 (S-TMSI, for example) monitors the random access message 4 including the Contention resolution message. In a case that the contention avoidance ID included in the random access message 4 is identical to the ID used to identify the terminal apparatus 1, the terminal apparatus 1 may consider that the contention resolution has been successfully completed, and set the value of the Temporary C-RNTI in the C-RNTI field. The terminal apparatus 1 having the value of the Temporary C-RNTI set in the C-RNTI field is considered to have completed an RRC connection.

The terminal apparatus 1 transmits, on the PUCCH, the HARQ-ACK being error detection results for the transport block included in the PDSCH including the random access message 4.

As described above, according to the present invention, the initial connection procedure between the terminal apparatus 1 and the base station apparatus 3 via the satellite 5 can be efficiently performed. A RACH occasion is configured for each polarization mode, the terminal apparatus 1 performs the random access procedure by using a RACH occasion corresponding to a polarization mode supported by the terminal apparatus, and performs the random access procedure from the message 1 to the message 4 by using a polarization mode matched between the terminal apparatus 1 and the satellite 5, and thus degradation in link performance due to mismatch of the polarization mode can be avoided.

A program running on the base station apparatus 3 and the terminal apparatus 1 according to the present invention may be a program (program that causes a computer to function) that controls a Central Processing Unit (CPU) and the like, such that the program realizes the functions of the above-described embodiment according to the present invention. Also, the information handled in these apparatuses is temporarily loaded into a Random Access Memory (RAM) while being processed, is then stored in a Hard Disk Drive (HDD) and various types of Read Only Memory (ROM) such as a Flash ROM, and is read, modified, and written by the CPU, as necessary.

Note that the terminal apparatus 1 and the base station apparatus 3 according to the aforementioned embodiment may be partially implemented by a computer. In such a case, a program for implementing such control functions may be recorded on a computer-readable recording medium to cause a computer system to read and execute the program recorded on this recording medium.

Note that it is assumed that the "computer system" mentioned here refers to a computer system built into the terminal apparatus 1 or the base station apparatus 3, and the computer system includes an OS and hardware components such as a peripheral device. A "computer-readable recording medium" refers to a portable medium such as a flexible disk, a magneto-optical disk, a ROM, and a CD-ROM, and a storage device such as a hard disk built into the computer system.

Moreover, the "computer-readable recording medium" may include a medium that dynamically retains the program for a short period of time, such as a communication wire that is used to transmit the program over a network such as the Internet or over a communication line such as a telephone line, and a medium that retains the program for a certain period of time, such as a volatile memory within the computer system which functions as a server or a client in a case that the program is transmitted via the communication wire. Furthermore, the aforementioned program may be configured to implement part of the functions described above, and also may be configured to be capable of implementing the functions described above in combination with a program already recorded in the computer system.

The terminal apparatus 1 may include at least one processor, and at least one memory including a computer program instruction (computer program). The memory and the computer program instruction (computer program) may adopt a configuration of causing the terminal apparatus 1 to perform the operation and the processing described in the above embodiment by using a processor. The base station apparatus 3 may include at least one processor, and at least one memory including a computer program instruction (computer program). The memory and the computer program instruction (computer program) may adopt a configuration of causing the base station apparatus 3 to perform the operation and the processing described in the above embodiment by using a processor.

Furthermore, the base station apparatus 3 according to the aforementioned embodiment may be achieved as an aggregation (apparatus group) including multiple apparatuses. Each of the apparatuses included in such an apparatus group may include each function, or some or all portions of each functional block of the base station apparatus 3 according to the aforementioned embodiment. As the apparatus group, it is only necessary to have a complete set of functions or functional blocks of the base station apparatus 3. Moreover, the terminal apparatus 1 according to the aforementioned embodiment can also communicate with the base station apparatus as the aggregation.

Also, the base station apparatus 3 according to the aforementioned embodiment may be an Evolved Universal Terrestrial Radio Access Network (EUTRAN) and/or a NextGen RAN (NG-RAN or NR RAN). Moreover, the base station apparatus 3 according to the aforementioned embodiment may have some or all of the functions of a higher node for an eNodeB and/or a gNB.

Also, some or all portions of each of the terminal apparatus 1 and the base station apparatus 3 according to the aforementioned embodiment may be implemented as an LSI which is a typical integrated circuit or may be implemented as a chip set. The functional blocks of each of the terminal apparatus 1 and the base station apparatus 3 may be individually implemented as a chip, or some or all of the functional blocks may be integrated into a chip. A circuit integration technique is not limited to the LSI, and may be implemented with a dedicated circuit or a general-purpose processor. Moreover, in a case that a circuit integration technology that substitutes an LSI appears with the advance of the semiconductor technology, it is also possible to use an integrated circuit based on the technology.

In addition, although the aforementioned embodiments have described the terminal apparatus as an example of a communication apparatus, the present invention is not limited to such a terminal apparatus, and is applicable to a terminal apparatus or a communication apparatus that is a stationary type or a non-movable type electronic apparatus installed indoors or outdoors, for example, such as an AV device, a kitchen device, a cleaning or washing machine, an air-conditioning device, office equipment, a vending machine, and other household appliances.

Although, the embodiments of the present invention have been described in detail above referring to the drawings, the specific configuration is not limited to the embodiments and includes, for example, design changes within the scope that does not depart from the gist of the present invention. Furthermore, in the present invention, various modifications are possible within the scope of claims, and embodiments that are made by suitably combining technical means disclosed according to the different embodiments are also included in the technical scope of the present invention. Furthermore, a configuration in which elements described in the respective embodiments and having mutually the same effects, are substituted for one another is also included.

### Reference Signs List

1 (1A, 1B, 1C) Terminal apparatus
3 Base station apparatus
4 Gateway
5 Satellite
10, 30 Radio transmission and/or reception unit
11, 31 Antenna unit
12, 32 RF unit
13, 33 Baseband unit
14, 34 Higher layer processing unit
15, 35 Medium access control layer processing unit
16, 36 Radio resource control layer processing unit

## Claims

1. A terminal apparatus comprising:
a processor; and
a memory configured to store a computer program code, wherein
the terminal apparatus performs
receiving information indicating a mapping between a polarization mode and a RACH occasion, and
transmitting a RACH in a RACH occasion corresponding to a polarization mode to be used for transmission.

2. The terminal apparatus according to claim 1, wherein
the polarization mode is any of linear polarization, horizontal polarization, vertical polarization, circular polarization, right-hand circular polarization, and left-hand circular polarization.

3. A communication method used in a terminal apparatus, the communication method comprising the steps of:
receiving information indicating a mapping between a polarization mode and a RACH occasion; and
transmitting a RACH in a RACH occasion corresponding to a polarization mode to be used for transmission.
